# EUROPÄISCHE PATENTSCHRIFT

(11) **EP 2 527 175 B1**
(45) Veröffentlichungstag und Bekanntmachung des Hinweises auf die Patenterteilung: **10.09.2014**
(21) Anmeldenummer: 12159379.2
(22) Anmeldetag: 14.03.2012
(51) Int. Cl.: B60J 5/04, B60H 1/00, B60J 9/04, B60H 1/24

(54) **Kraftfahrzeug mit Fahrgastzelle und Türöffnung**
Motor vehicle with a passenger compartment and a door opening
Véhicule automobile avec habitacle et ouverture de porte

(30) Priorität: 21.05.2011 DE 102011102213
(43) Veröffentlichungstag der Anmeldung: 28.11.2012
(73) Patentinhaber: REHAU AG + Co, 95111 Rehau (DE)
(72) Erfinder: Bechmann, Marcel, 07806 Neustadt (Orla) (DE); Lang, Gerhard, 95100 Selb (DE)

(56) Entgegenhaltungen:
- EP-A2- 1 406 048
- EP-A2- 1 609 644
- DE-A1- 4 138 355
- DE-U1-202007 002 768
- JP-A- 2009 154 707
- US-A1- 2011 117 830

## Beschreibung

### Hintergrund der Erfindung

Die vorliegende Erfindung betrifft ein Kraftfahrzeug mit einer Fahrgastzelle und wenigstens einer Türöffnung, die durch eine Kraftfahrzeugtür verschließbar ist.

Wenn bekannte Kraftfahrzeuge nach Schneefall mit Schnee bedeckt bzw. beladen sind, lässt sich beim Öffnen einer Kraftfahrzeugtür des Kraftfahrzeugs ein Eindringen von Schnee - insbesondere von auf dem Dach des Kraftfahrzeugs befindlichem Schnee - in die Fahrgastzelle bzw. Kraftfahrzeugzelle oft nicht vermeiden. Dieses unerwünschte Eindringen von Schnee ist unter anderem eine Folge des mit dem Öffnen der Kraftfahrzeugtür einhergehenden Sogeffekts, welcher den Schnee in die Fahrgastzelle zieht.

Insbesondere bei Personenkraftwagen neueren Typs, bei denen Abschnitte des Rands bzw. der Kante des Kraftfahrzeugdachs vertikal über einer Sitzfläche eines Kraftfahrzeugsitzes des Kraftfahrzeugs angeordnet sind, ist das beschriebene Eindringen des Schnees nahezu unvermeidlich, wobei hierbei insbesondere auch auf die Sitzfläche des Kraftfahrzeugs Schnee vom Dach des Kraftfahrzeugs aufgebracht wird bzw. auf die Sitzfläche fällt, auch ohne den Sogeffekt beim Öffnen der Tür. Das Eindringen des Schnees geht einher mit einer wesentlichen Einschränkung des Fahrkomforts durch Einbringen von Nässe bzw. Feuchtigkeit in die Fahrgastzelle und insbesondere auf die Sitzflächen der Kraftfahrzeugsitze. Typischerweise erfolgt ein Einbringen von Schnee in die Fahrgastzelle dann, wenn der Fahrer bzw. Fahrgast das mit Schnee beladene Kraftfahrzeug mit einem Handfeger vom Schnee befreien will, der sich jedoch oft im Kraftfahrzeug befindet, so dass das Einbringen bzw. Eindringen des Schnees beim Öffnen der Kraftfahrzeugtür zum Entnehmen des Handfegers aus dem Kraftfahrzeug erfolgt. Ein Kraftfahrzeug gemäß den Merkmalen des Oberbegriffs kann der DE 41 38 355 A1 entnommen werden.

### Zugrundeliegende Aufgabe

Der vorliegenden Erfindung liegt die Aufgabe zugrunde, ein Kraftfahrzeug und ein Verfahren zum Öffnen einer Kraftfahrzeugtür eines derartigen Kraftfahrzeugs anzugeben, mit welchen ein unerwünschtes Eindringen von Schnee in die Fahrgastzelle im Vergleich zu bekannten Lösungen wesentlich reduziert werden kann, wenn das Kraftfahrzeug mit Schnee wenigstens teilweise bedeckt ist.

### Erfindungsctemäße Lösung

Diese Aufgabe wird erfindungsgemäß mit einem Kraftfahrzeug mit den Merkmalen des Anspruchs 1 gelöst.

Erfindungsgemäß ist vorgesehen, dass das Kraftfahrzeug wenigstens eine Einrichtung aufweist, die dafür vorgesehen ist, beim Öffnen der Kraftfahrzeugtür eine Luftströmung auszubilden, die sich durchgehend durch die Türöffnung erstreckt und nach außerhalb des Kraftfahrzeugs gerichtet ist.

Wenn das Kraftfahrzeug mit Schnee wenigstens teilweise bedeckt bzw. beladen ist, kann beim Öffnen der Kraftfahrzeugtür ein Eindringen des Schnees, der von der beim Öffnen der Kraftfahrzeugtür ausgebildeten Luftströmung erfasst wird, in die Fahrgastzelle wirksam vermieden werden. Das unerwünschte Eindringen von Schnee in die Fahrgastzelle kann auf diese Weise im Vergleich zu bekannten Lösungen wesentlich reduziert werden.

Das Eindringen des Schnees in die Fahrgastzelle kann ohne die gemäß der Erfindung vorgesehene Luftströmung in bekannterweise durch Sogwirkung beim Öffnen der Kraftfahrzeugtür und/oder durch Herunterfallen des Schnees (z.B. vom Dach des Kraftfahrzeugs) infolge von mechanischen Erschütterungen beim Öffnen der Kraftfahrzeugtür erfolgen.

Bei einer bevorzugten Ausführungsform ist die Einrichtung eingerichtet bzw. dazu ausgebildet, in der Fahrgastzelle einen Überdruck zu erzeugen, wobei der Überdruck vorzugsweise wenigstens 100 mbar oder wenigstens 200 mbar oder wenigstens 500 mbar größer ist als der Luftdruck in Umgebung des Kraftfahrzeugs.

Durch Erzeugen des Überdrucks in der Fahrgastzelle mittels der hierfür eingerichteten Einrichtung kann beim Öffnen der Kraftfahrzeugtür infolge eines Drucksausgleichs zwischen dem Überdruck in der Fahrgastzelle und dem Luftdruck in der Umgebung des Kraftfahrzeugs die erfindungsgemäße Luftströmung ausgebildet werden, die sich durchgehend durch die Türöffnung erstreckt und nach außerhalb des Kraftfahrzeugs gerichtet ist. Insofern ist insbesondere die zur Erzeugung des Überdrucks eingerichtete Einrichtung eine Einrichtung, die dafür vorgesehen ist bzw. dafür eingesetzt wird, die erfindungsgemäße Luftströmung auszubilden, die sich durchgehend durch die Türöffnung erstreckt und nach außerhalb des Kraftfahrzeugs gerichtet ist.

Bei einer praktischen Ausführungsform weist die Einrichtung wenigstens ein Gebläse und/oder wenigstens einen Kompressor und/oder wenigstens einen Druckgasbehälter zur Erzeugung des Überdrucks in der Fahrgastzelle auf.

Mittels eines Gebläses zur Erzeugung des Überdrucks in der Fahrgastzelle kann auf praktische Weise ein zur Ausbildung der erfindungsgemäßen Luftströmung erforderlicher Überdruck in der Fahrgastzelle bereitgestellt werden. Die Einrichtung kann vorteilhaft auch einen Kompressor zur Erzeugung des Überdrucks in der Fahrgastzelle aufweisen. Auch mittels eines Kompressors kann auf praktische Weise der zur Ausbildung der erfindungsgemäßen Luftströmung erforderliche Überdruck in der Fahrgastzelle bereitgestellt werden. Der Kompressor kann insbesondere z.B. zum Füllen eines Druckgasbehälter mit z.B. Luft vorgesehen sein, wobei die Luft nach dem Füllen mit Überdruck in dem Druckgasbehälter aufgenommen ist, wobei zur Ausbildung des Überdrucks in der Fahrgastzelle die komprimierte Luft aus dem Druckgasbehälter in die Fahrgastzelle entweichen kann. Alternativ kann ein bereits mit einem Überdruck gefüllter Druckgasbehälter vorgesehen sein, der beispielsweise in der Garage separat mit Luft gefüllt wird bzw. worden ist.

Bei einer weiteren praktischen Ausführungsform weist die Einrichtung wenigstens ein Gebläse auf und ist eingerichtet, eine von dem Gebläse erzeugbare Luftströmung in einer Einströmrichtung in die Fahrgastzelle einströmen zu lassen, die zu der Türöffnung gerichtet ist.

Auch mit einer gemäß dieser weiteren praktischen Ausführungsform ausgebildeten Einrichtung kann dem Eindringen von Schnee wirksam entgegengewirkt werden, derart, dass das Gebläse aktiv, die Luftströmung bereitstellt bzw. ausbildet, die sich beim Öffnen der Kraftfahrzeugtür durchgehend durch die Türöffnung erstreckt und nach außerhalb des Kraftfahrzeugs gerichtet ist, wobei hierfür die Einrichtung eingerichtet ist, eine von dem Gebläse erzeugbare Luftströmung in einer Einströmrichtung in die Fahrgastzelle einströmen zu lassen, die zu der Türöffnung gerichtet ist.

Erfindungsgemäß ist die Einrichtung durch ein Türöffnungssignal aktivierbar. Das Türöffnungssignal kann z.B. ein von einer Fernbedienung zum Entriegeln der Kraftfahrzeugtür ausgesendetes Türöffnungssignal sein. Das Türöffnungssignal kann auch ein von einer Steuerung zum Steuern des Entriegelungsmechanismus der Kraftfahrzeugtür ausgegebenes bzw. ausgesendetes Türöffnungssignal sein, wobei die Steuerung eingerichtet ist, bei Erkennung eines Öffnungswunsches das Türöffnungssignal zum Entriegeln der Kraftfahrzeugtür auszugeben bzw. auszusenden.

Erfindungsgemäß lässt sich die Kraftfahrzeugtür nach Empfang des Türöffnungssignals erst nach Ablauf einer vorgegebenen Verzögerungszeit und/oder bei der Erreichung eines vorgegebenen Überdrucks manuell öffnen. Dies hat den Vorteil, dass der erfindungsgemäßen Einrichtung Zeit im Umfang der Verzögerungszeit gegeben werden kann, die Bedingungen bzw. Vorraussetzungen bereitzustellen bzw. zu schaffen, die beim Öffnen der Kraftfahrzeugtür für die Ausbildung der Luftströmung zur wirksamen Vermeidung des Eindringens von Schnee erforderlich sind. So kann z.B. durch Vorsehen der Verzögerungszeit, welche vorzugsweise innerhalb eines Bereichs von 2 Sekunden bis 15 Sekunden liegen kann, ein zur Ausbildung der Luftströmung hinreichend großer Überdruck in der Fahrgastzelle erzeugt bzw. aufgebaut werden, sofern, wie gemäß der obigen bevorzugten Ausführungsform vorgesehen, die Einrichtung eingerichtet ist, in der Fahrgastzelle einen Überdruck zu erzeugen. Auf diese Weise kann insbesondere auch von leistungsstarken Kompressoren bzw. Gebläsen abgesehen werden, die zwar in sehr kurzer Zeit einen hinreichend hohen Überdruck in der Fahrgastzelle bereitstellen können, jedoch vergleichsweise schwer und auch kostenintensiv sind.

Die Luftströmung erstreckt sich vorzugsweise über wenigstens dem 0,5-fachen der Abmessung der Türöffnung in der Längsrichtung der Türöffnung und /oder über wenigstens dem 0,5-fachen der Abmessung der Türöffnung in der Breitenrichtung der Türöffnung. Durch Vorsehen einer derartigen Luftströmung wird das Eindringen von Schnee beim Öffnen der Kraftfahrzeugtür vollständig oder nahezu vollständig vermieden.

Vorzugsweise kann die Strömung im Bereich der Türöffnung eine mittlere maximale Strömungsgeschwindigkeit aufweisen, die innerhalb eines Bereichs von wenigstens 1 m/s liegt, einhergehend mit einer sehr wirksamen Vermeidung des Eindringens von Schnee.

Bei einer praktischen Ausführungsform weist die Einrichtung eine Steuereinheit auf, wobei die Steuereinheit eingerichtet ist, einen von einer Temperaturmessvorrichtung zur Messung der Lufttemperatur in Umgebung des Kraftfahrzeugs ausgegebenen Temperaturmesswert zu empfangen und die Einrichtung auszuschalten, wenn der Temperaturmesswert größer oder gleich einem vorgegebenen Temperaturgrenzwert ist, oder einzuschalten, wenn der Temperaturmesswert kleiner oder gleich dem vorgegebenen Temperaturgrenzwert ist.

Diese praktische Ausführungsform, bei welcher das Kraftfahrzeug eine Temperaturmessvorrichtung zur Messung der Lufttemperatur in Umgebung des Kraftfahrzeugs aufweist, beschränkt vorteilhaft den Einsatz der Einrichtung auf vorgegebene Temperaturgrenzwerte für die Lufttemperatur in Umgebung des Kraftfahrzeugs die unterschritten werden müssen, um insbesondere einen Betrieb der Einrichtung bei Umgebungstemperaturen zu vermeiden, bei denen üblicherweise nicht mit Schneefall zu rechnen ist. Der vorgegebene Temperaturgrenzwert liegt vorzugsweise innerhalb eines Bereichs von 3 bis 10°C oder innerhalb eines Bereichs von 4 bis 7°C oder innerhalb eines Bereiches von 5 bis 6°C.

Bei einer weiteren praktischen Ausführungsform weist die Einrichtung eine Steuereinheit auf, und das Kraftfahrzeug weist eine Windschutzscheibe und wenigstens einen Niederschlagssensor auf, wobei der Niederschlagssensor eingerichtet ist, bei Beaufschlagung wenigstens eines Bereichs der Windschutzscheibe des Kraftfahrzeugs mit Niederschlag ein Ausgangssignal zur Feststellung der Beaufschlagung mit dem Niederschlag auszugeben, wobei die Steuereinheit eingerichtet ist, bei Empfangen des Ausgangssignals die Einrichtung einzuschalten.

Diese weitere praktische Ausführungsform ermöglicht vorteilhaft ein automatisiertes Einschalten der Einrichtung ohne ein Zutun des Anwenders, sofern von dem Niederschlagssensor ein Niederschlag, insbesondere auch in Form von Schnee, erkannt wird. Handelt es sich bei dem Niederschlag um Schnee, so kann mit dieser weiteren praktischen Ausführungsform bereits im Vorfeld, dem Eindringen von Schnee in die Fahrgastzelle beim Öffnen der Kraftfahrzeugtür vorgebeugt werden. Aber auch wenn es sich nicht um Schnee handelt, ist diese weitere praktische Ausführungsform von Vorteil, da insbesondere bei Temperaturen um 0° Celsius ein Niederschlag in Form von Regen oder Hagel oft in Schnee umschlagen kann.

Bei einer zur der obigen weiteren praktischen Ausführungsform alternativen Ausführungsform weist die Einrichtung eine Steuereinheit auf, und das Kraftfahrzeug weist eine Windschutzscheibe, wenigstens einen Außenspiegel und wenigstens einen Niederschlagssensor auf, wobei der Niederschlagssensor eingerichtet ist, bei Beaufschlagung wenigstens eines Bereichs der Windschutzscheibe des Kraftfahrzeugs oder wenigstens eines Bereichs einer Spiegelfläche des Außenspiegels mit Niederschlag, ein Ausgangssignal zur Feststellung der Beaufschlagung mit dem Niederschlag auszugeben, wobei die Steuereinheit eingerichtet ist, bei Empfangen des Ausgangssignals die Einrichtung einzuschalten.

Gemäß dem erfindungsgemäßen Verfahren zum Öffnen einer Kraftfahrzeugtür eines Kraftfahrzeugs wird beim Öffnen der Kraftfahrzeugtür eine Luftströmung ausgebildet, die sich durchgehend durch die von der Kraftfahrzeugtür verschließbare Türöffnung erstreckt und nach außerhalb des Kraftfahrzeugs gerichtet ist, einhergehend mit den bereits oben dargelegten vorteilhaften Möglichkeiten zur Vermeidung des Eindringens von Schnee in die Fahrgastzelle. Bevorzugt wird hierbei eine Luftströmung ausgebildet, die sich über wenigstens dem 0,5-fachen der Abmessung der Türöffnung in der Längsrichtung der Türöffnung und /oder über wenigstens dem 0,5-fachen der Abmessung der Türöffnung in der Breitenrichtung der Türöffnung erstreckt.

### Kurzbeschreibung der Zeichnungen

Nachfolgend werden Ausführungsbeispiele der Erfindung anhand der beigefügten Zeichnungen näher erläutert. Es zeigt:
- Fig. 1: eine Seitenansicht eines sehr schematisch dargestellten ersten Ausführungsbeispiels des erfindungsgemäßen Kraftfahrzeugs, und
- Fig. 2: eine Draufsicht in Schnittdarstellung auf ein sehr schematisch dargestelltes zweites Ausführungsbeispiel des erfindungsgemäßen Kraftfahrzeugs.

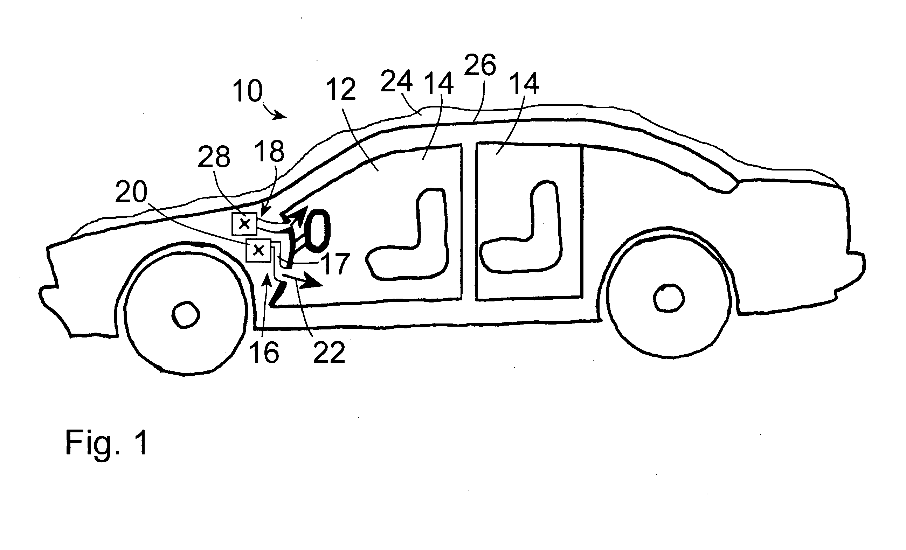

Das in Fig. 1 sehr schematisch dargestellte erste Ausführungsbeispiel des erfindungsgemäßen Kraftfahrzeugs 10 weist eine Fahrgastzelle 12 und vier Türöffnungen 14 auf, wobei jede Türöffnung 14 durch eine in Fig. 1 nicht dargestellte Kraftfahrzeugtür verschließbar ist.

Das Kraftfahrzeug 10 weist ferner ein erste und eine zweite Einrichtung 16, 18 auf. Die erste Einrichtung 16 weist ein sehr schematisch dargestelltes erstes Gebläse 20 auf. Ferner ist die erste Einrichtung 16 durch geeignete Strömungsführung bzw. durch Vorsehen wenigstens eines Strömungskanals 17 eingerichtet, eine von dem ersten Gebläse 20 erzeugbare Luftströmung in einer Einströmrichtung 22 in die Fahrgastzelle 12 einströmen zu lassen, die zu der Türöffnung 14 gerichtet ist.

Die erste Einrichtung 16 ist dafür vorgesehen, beim Öffnen der Kraftfahrzeugtür eine Luftströmung auszubilden, die sich durchgehend durch die vordere linke Türöffnung 14 erstreckt und nach außerhalb des Kraftfahrzeugs 10 gerichtet ist. Hierfür kann das erste Gebläse 20 der ersten Einrichtung 16 z.B. von einem Türöffnungssignal aktiviert werden, wobei das erste Gebläse 20 nach der Aktivierung gemäß der Einströmrichtung 22 die Luftströmung erzeugt, die zu der vorderen linken Türöffnung 14 gerichtet ist und sich beim Öffnen der vorderen linken Kraftfahrzeugtür durchgehend durch die vordere linke Türöffnung 14 erstreckt und nach außerhalb des Kraftfahrzeugs 10 gerichtet ist. Die Luftströmung vermeidet wirksam ein Eindringen von Schnee 24, welcher sich auf dem Dach 26 des Kraftfahrzeugs 10 befindet. Das Eindringen des Schnees 24 könnte ohne die erste bzw. zweite Einrichtung 16, 18 durch Sogwirkung beim Öffnen der Kraftfahrzeugtür und/oder durch Herunterfallen des Schnees 24 infolge von mechanischen Erschütterungen beim Öffnen der Kraftfahrzeugtür erfolgen.

Die zweite Einrichtung 18 weist ein zweites Gebläse 28 auf, welches dafür vorgesehen ist, einen Überdruck in der Fahrgastzelle 12 zu erzeugen, wenn alle vier Türöffnungen 14 durch die jeweiligen Kraftfahrzeugtüren verschlossen sind. Durch Erzeugen des Überdrucks in der Fahrgastzelle 12 mittels des zweiten Gebläses 28 der zweiten Einrichtung 18 kann beim Öffnen wenigstens einer Kraftfahrzeugtür infolge eines Drucksausgleichs zwischen dem Überdruck in der Fahrgastzelle 12 und dem Luftdruck in der Umgebung des Kraftfahrzeugs 10 die Luftströmung ausgebildet werden, die sich durchgehend durch die Türöffnung 14 erstreckt, nach außerhalb des Kraftfahrzeugs 10 gerichtet ist und das Eindringen von Schnee 24 wirksam vermeidet.

Im Unterschied zu der ersten Einrichtung 16, deren Wirkung bei dem hier dargestellten Ausführungsbeispiel auf die vordere linke Türöffnung 14 beschränkt ist, wird mittels der zweiten Einrichtung 18 ein Eindringen von Schnee beim Öffnen jeder der vier Kraftfahrzeugtüren wirksam vermieden durch Bereitstellen eines in der gesamten Fahrgastzelle 12 herrschenden Überdrucks. Auch die zweite Einrichtung 18 bzw. das zweite Gebläse 28 der zweiten Einrichtung 18 kann von einem Türöffnungssignal aktiviert werden.

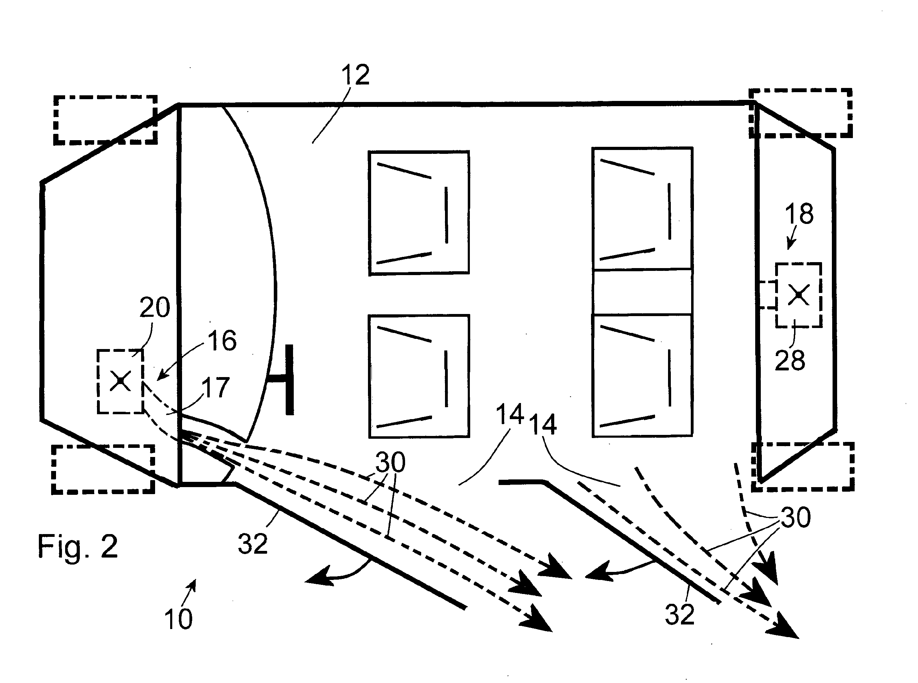

Auch bei dem in Fig. 2 sehr schematisch dargestellten zweiten Ausführungsbeispiel eines erfindungsgemäßen Kraftfahrzeugs 10 sind nur sehr schematisch dargestellte erste und zweite Einrichtungen 16, 18 vorgesehen, wobei die erste Einrichtung 16 ein erstes Gebläse 20 aufweist und eingerichtet ist, eine von dem ersten Gebläse 20 erzeugbare Luftströmung in einer Einströmrichtung in die Fahrgastzelle 12 einströmen zu lassen, die zu der vorderen linken Türöffnung 14 gerichtet ist. Das erste Gebläse 20 erzeugt nach der Aktivierung gemäß der vorgesehenen Einströmrichtung eine Luftströmung, die zu der vorderen linken Türöffnung 14 gerichtet ist und welche sich beim Öffnen der vorderen linken Kraftfahrzeugtür 32 zu einer Luftströmung 30 ausbildet, die sich durchgehend durch die vordere linke Türöffnung 14 erstreckt und nach außerhalb des Kraftfahrzeugs 10 gerichtet ist. Die Luftströmung 30 ist in der Fig.2 durch gestrichelte Pfeile veranschaulicht.

Die zweite Einrichtung 18 weist ein zweites Gebläse 28 auf, welches dafür vorgesehen ist, einen Überdruck in der Fahrgastzelle 12 zu erzeugen, wenn alle vier Türöffnungen 14 durch die jeweiligen Kraftfahrzeugtüren 32 verschlossen sind (in Fig. 2 sind vereinfacht nur zwei Türöffnungen 14 und zwei Kraftfahrzeugtüren 32 dargestellt). Durch Erzeugen des Überdrucks in der Fahrgastzelle 12 mittels des zweiten Gebläses 28 kann beim Öffnen z.B. der vorderen rechten Kraftfahrzeugtür 32 infolge eines Druckausgleichs zwischen dem Überdruck in der Fahrgastzelle 12 und dem Luftdruck in der Umgebung des Kraftfahrzeugs 10 eine Luftströmung 30 ausgebildet werden, die sich durchgehend durch die in Fig. 2 vordere rechte Türöffnung 14 erstreckt, nach außerhalb des Kraftfahrzeugs 10 gerichtet ist und das Eindringen von Schnee wirksam vermeidet.

### Bezugszeichenliste

- 10: Kraftfahrzeug
- 12: Fahrgastzelle
- 14: Türöffnung
- 16: erste Einrichtung
- 17: Strömungskanal
- 18: zweite Einrichtung
- 20: erstes Gebläse
- 22: Einströmrichtung
- 24: Schnee
- 26: Dach
- 28: zweites Gebläse
- 30: Luftströmung
- 32: Kraftfahrzeugtür

## Patentansprüche

1. Kraftfahrzeug (10) mit einer Fahrgastzelle (12) und wenigstens einer Türöffnung (14), die durch eine Kraftfahrzeugtür (32) verschließbar ist, wobei das Kraftfahrzeug (10) wenigstens eine Einrichtung (16, 18) aufweist, die dafür vorgesehen ist, beim Öffnen der Kraftfahrzeugtür (32) eine Luftströmung (30) auszubilden, die sich durchgehend durch die Türöffnung (14) erstreckt und nach außerhalb des Kraftfahrzeugs (10) gerichtet ist, wobei die Einrichtung (16, 18) durch ein Türöffnungssignal aktivierbar ist, **dadurch gekennzeichnet, dass** sich die Kraftfahrzeugtür (32) nach Empfang des Türöffnungssignals erst nach Ablauf einer vorgegebenen Verzögerungszeit und/oder bei der Erreichung eines vorgegebenen Überdrucks manuell öffnen lässt.

2. Kraftfahrzeug (10) nach Anspruch 1, **dadurch gekennzeichnet, dass** die Einrichtung (16, 18) eingerichtet ist, in der Fahrgastzelle (12) einen Überdruck zu erzeugen.

3. Kraftfahrzeug (10) nach Anspruch 2, **dadurch gekennzeichnet, dass** der Überdruck wenigstens 100 mbar oder wenigstens 200 mbar oder wenigstens 500 mbar größer ist als der Luftdruck in Umgebung des Kraftfahrzeugs (10).

4. Kraftfahrzeug (10) nach Anspruch 2 oder 3, **dadurch gekennzeichnet, dass** die Einrichtung (16, 18) wenigstens ein Gebläse (20, 28) und/oder wenigstens einen Kompressor zur Erzeugung des Überdrucks in der Fahrgastzelle (12) aufweist.

5. Kraftfahrzeug (10) nach Anspruch 1, **dadurch gekennzeichnet, dass** die Einrichtung (16) wenigstens ein Gebläse (20) aufweist und eingerichtet ist, eine von dem Gebläse (20) erzeugbare Luftströmung in einer Einströmrichtung (22) in die Fahrgastzelle (12) einströmen zu lassen, die zu der Türöffnung (14) gerichtet ist.

6. Kraftfahrzeug (10) nach einem der vorangehenden Ansprüche, **dadurch gekennzeichnet, dass** sich die Luftströmung über wenigstens dem 0,5-fachen der Abmessung der Türöffnung (14) in der Längsrichtung der Türöffnung (14) und /oder über wenigstens dem 0,5-fachen der Abmessung der Türöffnung (14) in der Breitenrichtung der Türöffnung (14) erstreckt.

7. Kraftfahrzeug (10) nach einem der vorangehenden Ansprüche, **dadurch gekennzeichnet, dass** die Einrichtung (16, 18) eine Steuereinheit aufweist, wobei die Steuereinheit eingerichtet ist, einen von einer Temperaturmessvorrichtung zur Messung der Lufttemperatur in Umgebung des Kraftfahrzeugs ausgegebenen Temperaturmesswert zu empfangen und die Einrichtung (16, 18) auszuschalten, wenn der Temperaturmesswert größer oder gleich einem vorgegebenen Temperaturgrenzwert ist, oder einzuschalten, wenn der Temperaturmesswert kleiner oder gleich dem vorgegebenen Temperaturgrenzwert ist.

8. Kraftfahrzeug (10) nach einem der Ansprüche 1 bis 6, **dadurch gekennzeichnet, dass** die Einrichtung (16, 18) eine Steuereinheit aufweist, und dass das Kraftfahrzeug (10) eine Windschutzscheibe und wenigstens einen Niederschlagssensor aufweist, wobei der Niederschlagssensor eingerichtet ist, bei Beaufschlagung wenigstens eines Bereichs der Windschutzscheibe des Kraftfahrzeugs (10) mit Niederschlag ein Ausgangssignal zur Feststellung der Beaufschlagung mit dem Niederschlag auszugeben, wobei die Steuereinheit eingerichtet ist, bei Empfangen des Ausgangssignals die Einrichtung (16, 18) einzuschalten.

9. Kraftfahrzeug (10) nach einem der Ansprüche 1 bis 6, **dadurch gekennzeichnet, dass** die Einrichtung (16, 18) eine Steuereinheit aufweist, und dass das Kraftfahrzeug (10) eine Windschutzscheibe, wenigstens einen Außenspiegel und wenigstens einen Niederschlagssensor aufweist, wobei der Niederschlagssensor eingerichtet ist, bei Beaufschlagung wenigstens eines Bereichs der Windschutzscheibe des Kraftfahrzeugs (10) oder wenigstens eines Bereichs einer Spiegelfläche des Außenspiegels mit Niederschlag, ein Ausgangssignal zur Feststellung der Beaufschlagung mit dem Niederschlag auszugeben, wobei die Steuereinheit eingerichtet ist, bei Empfangen des Ausgangssignals die Einrichtung (16, 18) einzuschalten.

10. Verfahren zum Öffnen einer Kraftfahrzeugtür (32) eines Kraftfahrzeugs (10), wobei beim Öffnen der Kraftfahrzeugtür (32) eine Luftströmung (30) ausgebildet wird, die sich durchgehend durch die von der Kraftfahrzeugtür (32) verschließbare Türöffnung (14) erstreckt ,nach außerhalb des Kraftfahrzeugs (10) gerichtet ist und durch ein Türöffnungssignal aktiviert wird, **dadurch gekennzeichnet, dass** ein manuelles Öffnen der Kraftfahrzeugtür (32) nach Empfang des Türöffnungssignal erst nach Ablauf einer vorgegebenen Verzögerungszeit und/oder bei der Erreichung eines vorgegebenen Überdrucks möglich ist.

11. Verfahren nach Anspruch 10, **dadurch gekennzeichnet, dass** eine Luftströmung (30) ausgebildet wird, die sich über wenigstens dem 0,5-fachen der Abmessung der Türöffnung (14) in der Längsrichtung der Türöffnung (14) und /oder über wenigstens dem 0,5-fachen der Abmessung der Türöffnung (14) in der Breitenrichtung der Türöffnung (14) erstreckt.

## Claims

1. Motor vehicle (10) with a passenger compartment (12) and at least one door opening (14) which can be closed by a motor vehicle door (32), wherein the motor vehicle (10) has at least one device (16, 18) which is provided, when the motor vehicle door (32) is opened, to form an air stream (30) which extends continuously through the door opening (14) and is directed towards the outside of the motor vehicle (10), wherein the device (16, 18) can be activated by a door opening signal, **characterized in that** after the reception of the door opening signal the motor vehicle door (32) cannot be opened manually until after the expiry of a predefined delay and/or until a predefined excess pressure is reached.

2. Motor vehicle (10) according to Claim 1, **characterized in that** the device (16, 18) is configured to generate an excess pressure in the passenger compartment (12).

3. Motor vehicle (10) according to Claim 2, **characterized in that** the excess pressure is at least 100 mbar or at least 200 mbar or at least 500 mbar higher than the air pressure in the surroundings of the motor vehicle (10).

4. Motor vehicle (10) according to Claim 2 or 3, **characterized in that** the device (16, 18) has at least one blower (20, 28) and/or at least one compressor for generating the excess pressure in the passenger compartment (12).

5. Motor vehicle (10) according to Claim 1, **characterized in that** the device (16) has at least one blower (20) and is configured to allow an air stream, which can be generated by the blower (20) into the passenger compartment (12) in an inflow direction (22) which is directed towards the door opening (14).

6. Motor vehicle (10) according to one of the preceding claims, **characterized in that** the air stream extends over at least 0.5 times the dimension of the door opening (14) in the longitudinal direction of the door opening (14) and/or over at least 0.5 times the dimension of the door opening (14) in the width direction of the door opening (14).

7. Motor vehicle (10) according to one of the preceding claims, **characterized in that** the device (16, 18) has a control unit, wherein the control unit is configured to receive a temperature measured value which is output by a temperature measuring device for measuring the air temperature in the surroundings of the motor vehicle, and to switch off the device (16, 18) if the temperature measured value is higher than or equal to a predefined temperature limiting value, or to switch it on if the temperature measured value is lower than or equal to the predefined temperature limiting value.

8. Motor vehicle (10) according to one of Claims 1 to 6, **characterized in that** the device (16, 18) has a control unit, and **in that** the motor vehicle (10) has a windscreen and at least one precipitation sensor, wherein the precipitation sensor is configured to output, when at least one region of the windscreen of the motor vehicle (10) is subjected to precipitation, an output signal for detecting the subjection to the precipitation, wherein the control unit is configured to switch on the device (16, 18) when the output signal is received.

9. Motor vehicle (10) according to one of Claims 1 to 6, **characterized in that** the device (16, 18) has a control unit, and **in that** the motor vehicle (10) has a windscreen, at least one exterior rear view mirror and at least one precipitation sensor, wherein the precipitation sensor is configured to output, when at least one region of the windscreen of the motor vehicle (10) or at least one region of a mirrored surface of the exterior rear view mirror is subjected to precipitation, an output signal for detecting the subjection to the precipitation, wherein the control unit is configured to switch on the device (16, 18) when the output signal is received.

10. Method for opening a motor vehicle door (32) of a motorvehicle (10), wherein, when the motor vehicle door (32) is opened, an air stream (30) is formed which extends continuously through the door opening (14) which can be closed by the motor vehicle door (32), is directed towards the outside of the motor vehicle (10) and is activated by a door opening signal, **characterized in that** manual opening of the motor vehicle door (32) after the door opening signal has been received is not possible until the expiry of a predefined delay and/or until a predefined excess pressure is reached.

11. Method according to Claim 10, **characterized in that** an air stream (30) is formed which extends over at least 0.5 times the dimension of the door opening (14) in the longitudinal direction of the door opening (14) and/or over at least 0.5 times the dimension of the door opening (14) in the width direction of the door opening (14).

## Revendications

1. Véhicule automobile (10) avec un habitacle (12) et au moins une ouverture de porte (14) pouvant être verrouillée par une porte de véhicule automobile (32), le véhicule automobile (10) comportant au moins un dispositif (16, 18) prévu pour former un courant d'air (30) lors de l'ouverture de la porte de véhicule automobile (32), ledit courant d'air s'étendant de façon traversante à travers l'ouverture de porte (14) et étant orienté vers l'extérieur du véhicule automobile (10), le dispositif (16, 18) pouvant être activé par un signal d'ouverture de porte, **caractérisé en ce que** la porte de véhicule automobile (32) ne se laisse ouvrir manuellement à réception du signal d'ouverture de porte qu'après l'écoulement d'une durée de temporisation prédéfinie et/ou lorsqu'une surpression prédéfinie est atteinte.

2. Véhicule automobile (10) selon la revendication 1, **caractérisé en ce que** le dispositif (16, 18) est conçu pour produire une surpression dans l'habitacle (12).

3. Véhicule automobile (10) selon la revendication 2, **caractérisé en ce que** la surpression est au moins supérieure de 100 mbar ou au moins de 200 mbar ou au moins de 500 mbar par rapport à la pression de l'air régnant dans l'environnement du véhicule automobile (10).

4. Véhicule automobile (10) selon la revendication 2 ou 3, **caractérisé en ce que** le dispositif (16, 18) comporte au moins une soufflerie (20, 28) et/ou au moins un compresseur pour produire la surpression régnant dans l'habitacle (12).

5. Véhicule automobile (10) selon la revendication 1, **caractérisé en ce que** le dispositif (16) comporte au moins une soufflerie (20) et est conçu pour laisser s'écouler un courant d'air pouvant être produit par la soufflerie (20) dans une direction d'écoulement (22), dans l'habitacle (12), orientée vers l'ouverture de porte (14).

6. Véhicule automobile (10) selon l'une quelconque des revendications précédentes, **caractérisé en ce que** le courant d'air s'étend sur au moins 0,5 fois la dimension de l'ouverture de porte (14) dans la direction longitudinale de l'ouverture de porte (14) et/ou sur au moins 0,5 fois la dimension de l'ouverture de porte (14) dans la direction de largeur de l'ouverture de porte (14).

7. Véhicule automobile (10) selon l'une quelconque des revendications précédentes, **caractérisé en ce que** le dispositif (16, 18) comporte une unité de commande, l'unité de commande étant conçue pour recevoir une valeur de mesure de température émise par un dispositif de mesure de température servant à mesurer la température de l'air dans l'environnement du véhicule automobile et pour déconnecter le dispositif (16, 18) lorsque la valeur de mesure de température est supérieure ou égale à une valeur limite de température prédéfinie ou pour le déconnecter lorsque la valeur de mesure de température est inférieure ou égale à la valeur limite de température prédéfinie.

8. Véhicule automobile (10) selon l'une quelconque des revendications 1 à 6, **caractérisé en ce que** le dispositif (16, 18) comporte une unité de commande et que le véhicule automobile (10) comporte un pare-brise et au moins un capteur de précipitations, le capteur de précipitations étant conçu, en cas de sollicitation d'au moins une zone du pare-brise du véhicule automobile (10) par des précipitations, pour émettre un signal de sortie constatant la sollicitation par les précipitations, l'unité de commande étant conçue pour connecter le dispositif (16, 18) à réception du signal de sortie.

9. Véhicule automobile (10) selon l'une quelconque des revendications 1 à 6, **caractérisé en ce que** le dispositif (16, 18) comporte une unité de commande et que le véhicule automobile (10) comporte un pare-brise, au moins un rétroviseur extérieur et au moins un capteur de précipitations, le capteur de précipitations étant conçu, en cas de sollicitation d'au moins une zone du pare-brise du véhicule automobile (10) ou d'au moins une zone d'une surface réfléchissante du rétroviseur extérieur par des précipitations, pour émettre un signal de sortie constatant la sollicitation par les précipitations, l'unité de commande étant conçue pour connecter le dispositif (16, 18) à réception du signal de sortie.

10. Procédé d'ouverture d'une porte de véhicule automobile (32) d'un véhicule automobile (10), un courant d'air (30) étant réalisé lors de l'ouverture de la porte de véhicule automobile (32), ledit courant d'air s'étendant de façon traversante à travers l'ouverture de porte (14) pouvant être verrouillée par une porte de véhicule automobile (32), étant orienté vers l'extérieur du véhicule automobile (10) et étant activé par un signal d'ouverture de porte, **caractérisé en ce qu'**une ouverture manuelle de la porte de véhicule automobile (32) n'est possible à réception du signal d'ouverture de porte qu'après l'écoulement d'une durée de temporisation prédéfinie et/ou lorsqu'une surpression prédéfinie est atteinte.

11. Procédé selon la revendication 10, **caractérisé en ce qu'**un courant d'air (30) est réalisé, ledit courant d'air s'étendant sur au moins 0,5 fois la dimension de l'ouverture de porte (14) dans la direction longitudinale de l'ouverture de porte (14) et/ou sur au moins 0,5 fois la dimension de l'ouverture de porte (14) dans la direction de largeur de l'ouverture de porte (14).
